# EUROPÄISCHE PATENTANMELDUNG

(11) **EP 2 270 362 A1**
(43) Veröffentlichungstag der Anmeldung: **05.01.2011**
(21) Anmeldenummer: 10163919.3
(22) Anmeldetag: 26.05.2010
(51) Int. Cl.: F16H 25/12, F16D 23/12

(54) **Vorspanneinheit**

(30) Priorität: 24.06.2009 DE 102009030208
(71) Anmelder: Schaeffler Technologies GmbH & Co. KG, 91074 Herzogenaurach (DE)
(72) Erfinder: Smetana, Tomas, 91074, Herzogenaurach (DE)

(57) **Zusammenfassung**

Es ist eine Vorspanneinheit (1) mit einer ersten Rampenscheibe (2) und einer zweiten Rampenscheibe (5), die beide mehrere Rampenkonturen (8) in einer Seite einer ringförmigen Fläche der Rampenscheiben (2, 5) ausgeformt haben, offenbart. Mehrere Wälzkörper (3) sind in jeweils mehreren Gruppen (30) in einem Käfig (4) angeordnet. Der Käfig (4) ist derart geformt, dass er an die Rampenkonturen (8) der beiden Rampenscheiben (2, 5) angepasst ist.

## Beschreibung

### Gebiet der Erfindung

Die Erfindung betrifft eine Vorspanneinheit. Im Besonderen betrifft die Erfindung eine Vorspanneinheit, die im Wesentlichen aus einer ersten Rampenscheibe und einer zweiten Rampenscheibe besteht. Die erste und zweite Rampenscheibe haben mehrere Rampenkonturen in einer Seite in einer ringförmigen Fläche der Rampenscheibe ausgeformt. Zwischen der ersten und der zweiten Rampenscheibe sind mehrere Wälzkörper in einem Käfig drehbar gehaltert. Durch Drehschwenken wenigstens einer der beiden Rampenscheiben relativ zu der anderen Rampenscheibe in der Vorspanneinheit steigen die Wälzkörper an den Rampenkonturen auf und/oder ab.

### Hintergrund der Erfindung

Derartige Vorspanneinheiten finden bei Getrieben von Kraftfahrzeugen Verwendung, um insbesondere die Betätigung einer Reibungskupplung im Antriebsstrang eines Kraftfahrzeugs zu ermöglichen.

Die deutsche Patentschrift DE 10 2005 053 555 B3 offenbart eine Axialverstellvorrichtung in Form einer Kugelrampenanordnung. Die Axialverstellvorrichtung umfasst zwei auf einer gemeinsamen Achse zentrierte Scheiben, von denen eine axial abgestützt und die andere axial verschiebbar ist und von denen zumindest eine drehend antreibbar ist. Die beiden Scheiben weisen jeweils auf ihren zueinander zugewandten Stirnflächen eine gleich große Mehrzahl von in Umfangsrichtung verlaufenden Kugelringen auf. Die beiden Scheiben werden also mit Kugeln als Wälzkörper gelagert.

Die deutsche Offenlegungsschrift DE 103 420 13 A1 offenbart eine Reibungskupplung, wobei die Reibungskupplung zur Drehmomentübertragung von einer Antriebsseite zu einer Abtriebsseite in einem mechanischen Antriebsstrang, insbesondere eines Kraftfahrzeugs, mit einer Kupplungsscheibenanordnung vermittelt w die Antriebsseite mit der Abtriebsseite koppelt. Die Kupplungsscheibenanordnung kann zwischen einer Drehmoment übertragenden Einkuppelstellung und einer Drehmoment übertragungsfreien Auskuppelstellung verlagerbar sein. Hierzu wird eine Druckplatte entlang einer Kupplungslängsachse verschoben. Zwischen den beiden Scheiben der Kupplungsscheibenanordnung sind Walzen vorgesehen, die an den Scheiben, welche in den beiden Druckplatten ausgeformt sind, abrollen.

Die noch nicht veröffentlichte deutsche Patentanmeldung offenbart eine Vorspanneinheit mit einer ersten Rampenscheibe und einer zweiten Rampenscheibe, die beide mehrere Rampenkonturen in einer Seite einer ringförmigen Fläche der Rampenscheibe ausgeformt haben. Jede Rampenkontur umfasst eine erste Rampe und eine zweite Rampe, so dass zwischen der ersten und der zweiten Rampenscheibe mindestens ein Wälzkörper derart angeordnet ist, dass in der Vorspanneinheit durch Drehschwenken mindestens einer der beiden Rampenscheiben relativ zu der anderen Rampenscheibe die Wälzkörper an den Rampenkonturen auf- und/oder absteigen. Dabei sind die Rampenscheiben derart ausgestaltet, dass zwischen der Seite der ringförmigen Fläche der Rampenscheibe, die keine Rampenkonturen umfasst und den benachbarten Elementen der jeweiligen Rampenscheibe mehrere Hohlräume ausgebildet sind.

Die deutsche Patentschrift DE 10 2004 015 271 B4 offenbart eine Drehmoment-Übertragungsvorrichtung. Hier sind die Wälzkörper und das Axiallager auf einem Teilkreis angebracht, der den gleichen Durchmesser aufweist. Als Wälzkörper werden Kugeln verwendet.

Der Erfindung liegt die Aufgabe zugrunde, eine Vorspanneinheit zu schaffen, die eine möglichst hohe Verdrehsteifigkeit aufweist und es dabei ermöglicht, die übertragbaren Belastungen zu erhöhen. Hinzu kommt, dass mit der erfindungsgemäßen Vorspanneinheit eine Bauraumreduzierung in axialer Richtung der Vorspanneinheit einhergehen soll.

Die obige Aufgabe wird durch eine Vorspanneinheit gelöst, die die Merkmale des Anspruchs 1 umfasst.

Es ist von besonderem Vorteil, dass die mehreren Wälzkörper zwischen der ersten und der zweiten Rampenscheibe in jeweils mehrere Gruppen zusammengefasst sind. Die Gruppen der Wälzkörper sind dabei in einem Käfig angeordnet, wobei der Käfig derart ausgeformt ist, dass er an die Rampenkonturen der beiden Rampenscheiben angepasst ist. Mit anderen Worten bedeutet dies, dass der Käfig derart geformt ist, dass er der durch die erste Rampenscheibe und die zweite Rampenscheibe vorgegebenen Kontur folgt.

Gemäß einer ersten Ausführungsform sind die mehreren Rampenkonturen der ersten und der zweiten Rampenscheibe als eine einfache Rampe ausgebildet. Jede dieser Rampen wirkt mit den mehreren Gruppen der Wälzkörper zusammen.

Gemäß einer weiteren Ausführungsform weist jede Rampenkontur eine erste Rampe und eine zweite Rampe auf. Zwischen der ersten und der zweiten Rampenscheibe sind die Gruppen der Wälzkörper derart im Käfig angeordnet, dass jede Gruppe zwischen der ersten Rampe der ersten Rampenscheibe und der zweiten Rampe der zweiten Rampenscheibe, sowie zwischen der zweiten Rampe der ersten Rampenscheibe und der ersten Rampe der zweiten Rampenscheibe angeordnet ist.

Jede Gruppe umfasst bis zu vier Wälzkörper. Wälzkörper können eine ballige Form besitzen, ebenso können die Wälzkörper als Nadeln ausgebildet sein. Im Fall der Nadeln weisen diese eine Länge auf, die dem dreifachen des Durchmessers entspricht. Der Durchmesser der Wälzkörper liegt im Intervall zwischen 1 mm und 5 mm.

Zielanwendung einer derartigen Vorspanneinheit ist die Lagerpatrone mit lastabhängiger Vorspannung. Eine möglichst schmale Vorspanneinheit muss abhängig von relativ geringen Verdrehwinkeln, wie z. B. < 10 °, schnell hohe Axialkräfte aufbauen, d. h. die Vorspanneinheit muss möglichst hohe Verdrehsteifigkeit aufweisen. Der Vorteil der gegenwärtigen Erfindung ist die hohe Verdrehsteifigkeit, eine damit verbundene Erhöhung der übertragbaren Belastungen und eine Bauraumreduzierung in axialer Richtung der Vorspanneinheit.

Bei der erfindungsgemäßen Vorspanneinheit sind mehrere Wälzkörper zu Gruppen zusammengefasst. Es ist von besonderem Vorteil, wenn die Wälzkörper als Nadeln ausgebildet sind. Es sind vier Nadeln pro Rampe vorgesehen. Die Nadeln werden im Käfig in entsprechenden ausgeformten Taschen positioniert und geführt. Eine weitere Laststeigerung könnte dadurch erreicht werden, dass mehrere Nadeln in einer gemeinsamen Tasche untergebracht werden. Dies hätte den Vorteil, dass die Käfigstege entfallen würden, welche die einzelnen Nadeln bzw. Wälzkörper voneinander trennen. Jedoch ergibt sich hieraus ein Nachteil, dass die einzelnen Nadeln nicht sauber geführt sind. Ein weiterer Nachteil der fehlenden Käfigstege ist, dass die Halterungsfunktion des Käfigs für die einzelnen Wälzkörper reduziert ist.

Obwohl sich die nachfolgende Beschreibung der Vorspanneinheit auf die Verwendung von Nadeln als Wälzkörper zwischen den beiden Rampenscheiben bezieht, soll dies nicht als eine Beschränkung der Erfindung aufgefasst werden. Wie bereits der vorangehenden Beschreibung zu entnehmen ist, können zwischen der ersten und der zweiten Rampenscheibe mehrere Gruppen, aus jeweils mehreren Wälzkörpern bzw. Nadeln angeordnet sein. Ferner sei darauf hingewiesen, dass in den verschiedenen Figuren für gleiche Elemente die gleichen Bezugszeichen verwendet werden.

Im Folgenden sollen Ausführungsbeispiele die Erfindung und ihre Vorteile anhand der beigefügten Figuren näher erläutern.
- Figur 1: zeigt eine perspektivische Explosionsdarstellung der erfindungs- gemäßen Vorspanneinheit gemäß einer ersten Ausführungsform.
- Figur 2: zeigt eine perspektivische Ansicht der erfindungsgemäßen Vor- spanneinheit gemäß der ersten Ausführungsform.
- Figur 3: zeigt eine perspektivische Ansicht der erfindungsgemäßen Vor- spanneinheit gemäß der ersten Ausführungsform, wobei die erste Rampenscheibe entfernt ist, um somit einen besseren Einblick auf den Käfig mit den Gruppen der Wälzkörper zu erhalten.
- Figur 4: zeigt eine Draufsicht auf den Käfig, der bei der ersten Ausfüh- rungsform der Vorspanneinheit Verwendung findet.
- Figur 5: zeigt eine Seitenansicht der erfindungsgemäßen Vorspanneinheit gemäß der ersten Ausführungsform der Erfindung.
- Figur 6: zeigt eine vergrößerte Darstellung des in Figur 5 mit X gekenn- zeichneten Bereichs.
- Figur 7: zeigt eine perspektivische Ansicht der erfindungsgemäßen Vor- spanneinheit gemäß einer zweiten Ausführungsform, wobei die erste Rampenscheibe weggelassen ist, um die Anordnung der Gruppen der Wälzkörper in dem Käfig zu verdeutlichen.
- Figur 8: zeigt die Draufsicht auf den Käfig, der bei der zweiten Ausfüh- rungsform der Vorspanneinheit Verwendung findet.
- Figur 9: zeigt eine Seitenansicht der Vorspanneinheit gemäß der zweiten Ausführungsform der Erfindung.
- Figur 10: zeigt eine vergrößerte Darstellung des in Figur 9 mit X gekenn- zeichneten Bereichs.
- Figur 11: zeigt eine perspektivische Ansicht eines als Nadel ausgebildeten Wälzkörpers.

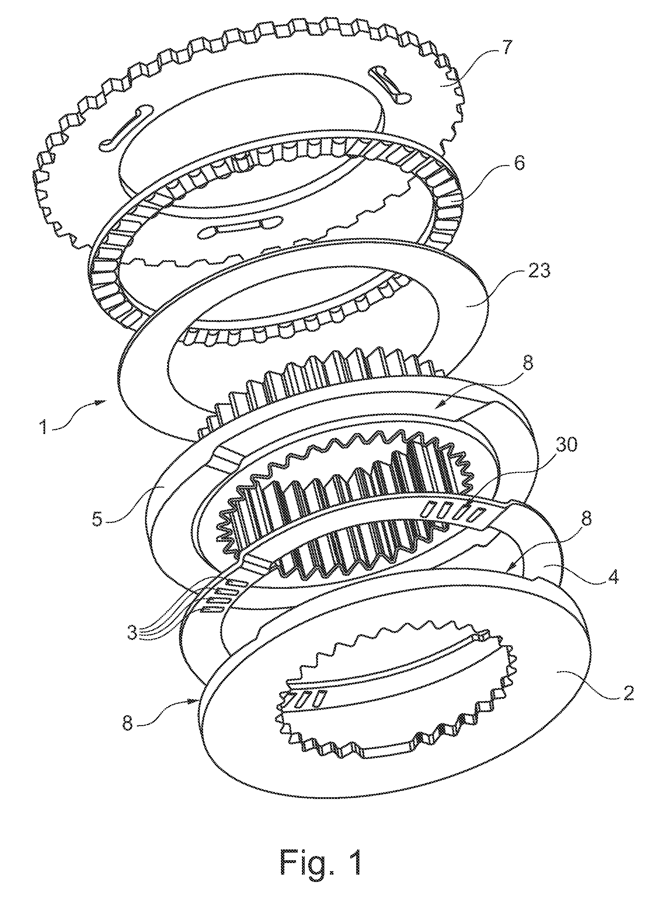

**Figur 1** zeigt eine perspektivische Explosionsdarstellung der erfindungsgemäßen Vorspanneinheit 1. Die Vorspanneinheit 1 besteht im Wesentlichen aus einer ersten Rampenscheibe 2 und einer zweiten Rampenscheibe 5. Zwischen der ersten Rampenscheibe 2 und der zweiten Rampenscheibe 5 sind mehrere Wälzkörper 3 angeordnet. Die Wälzkörper 3 sind in der hier beschriebenen Ausführungsform als Nadeln ausgebildet. Die Wälzkörper sind in Gruppen 30 im Käfig 4 gehaltert. Der Käfig 4 ist somit zwischen der ersten Rampenscheibe 2 und der zweiten Rampenscheibe 5 angeordnet. Die erste Rampenscheibe 2 und die zweite Rampenscheibe 5 haben an aufeinander zugewandten Seiten jeweils Rampenkonturen 8 ausgebildet. Der Käfig 4 für die Halterung der Gruppen 30 der Wälzlager 3 ist gemäß der durch die Rampenkonturen 8 vorgegebenen Kontur angepasst. Eine Laufscheibe 23 wirkt mit derjenigen Oberfläche der zweiten Rampenscheibe 5 zusammen, welche keine Rampenkonturen 8 trägt. Auf die Laufscheibe 23 ist ein Axiallager 6 aufgesetzt, das abschließend mit einer Anlaufscheibe 7 zusammenwirkt.

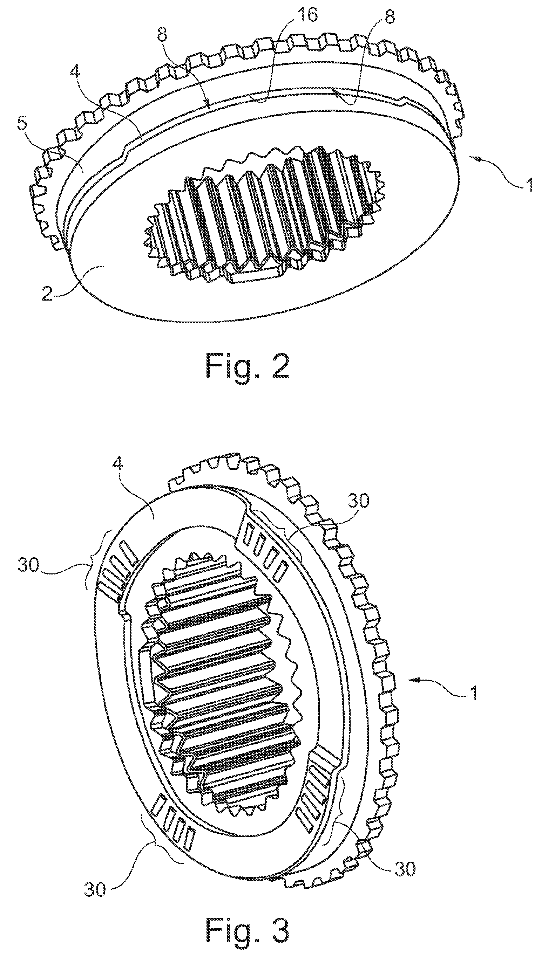

**Figur 2** zeigt eine perspektivische Ansicht der Vorspanneinheit 1 gemäß der ersten Ausführungsform der Erfindung. Die erste Rampenscheibe 2 und die zweite Rampenscheibe 5 sind im nicht betätigtem Zustand dargestellt. Dabei greifen die einfachen Rampen 16 der ersten Rampenscheibe und die einfachen Rampen 16 der zweiten Rampenscheibe ineinander. Die axiale Vorspanneinheit 1 ist bei der in Figur 2 gezeigten Darstellung nicht betätigt.

**Figur 3** zeigt eine perspektivische Ansicht der erfindungsgemäßen Vorspanneinheit gemäß der ersten Ausführungsform der Erfindung. Hier ist die erste Rampenscheibe 1 weggelassen, um einen besseren Einblick in das Zusammenwirken des Käfigs mit den Rampenscheiben 2, 5 zu erhalten. Der Käfig 4 trägt, wie bereits erwähnt, die in Gruppen zusammengestellten Wälzkörper 3. In der in Figur 3 gezeigten Ausführungsform sind vier Gruppen 30 der Wälzkörper 3 entlang des Umfangs des Käfigs 4 angeordnet. Der Käfig 4 hat entsprechend der Anzahl der Rampen 16 jeweils entsprechende Stufen 9 ausgebildet, so dass der Käfig sich an die Form der durch die in den Rampenscheiben 2 und 5 ausgeformten Rampen 16 anpasst.

Dadurch ist es möglich, die Bautiefe des Geräts zur Luftdruckanpassung weiter zu reduzieren.

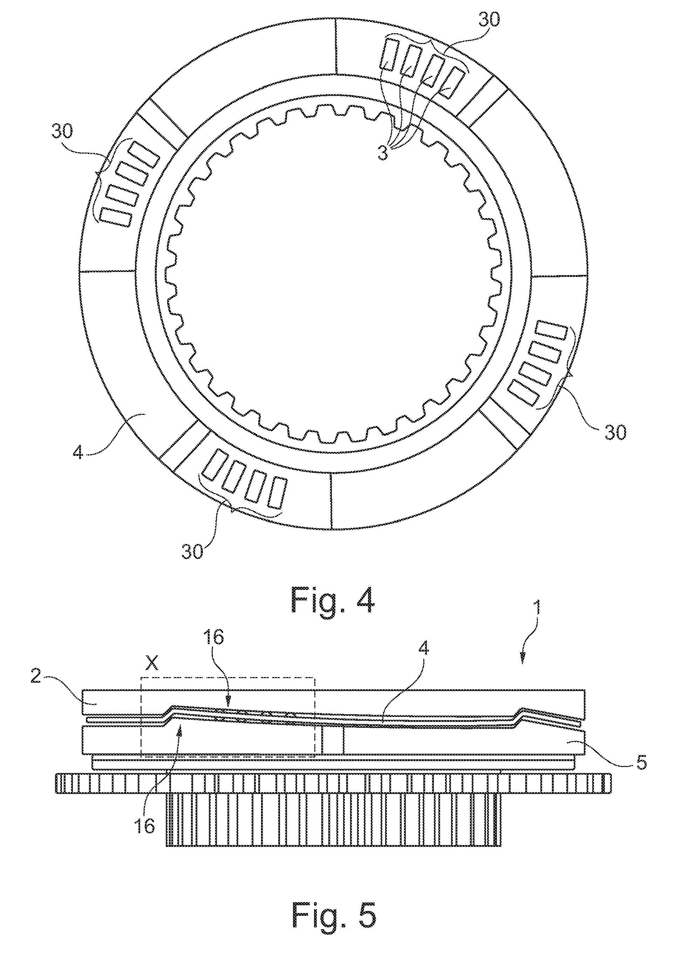

**Figur 4** zeigt eine Draufsicht auf den Käfig 4, der gemäß der ersten Ausführungsform der Erfindung Verwendung findet. Wie bereits erwähnt, sind die Wälzkörper 3, hier Nadeln, jeweils zu Gruppen 30 zusammengefasst. Der Käfig besitzt mehrere Absätze, so dass der Käfig 4 an die Kontur der ersten Rampenscheibe 2 und der zweiten Rampenscheibe 5 angepasst ist.

**Figur 5** zeigt eine Seitenansicht der Vorspanneinheit 1 gemäß der ersten Ausführungsform der Erfindung. Die erste Rampenscheibe 2 und die zweite Rampenscheibe 5 haben, wie bereits erwähnt, mehrere Rampen 16, die einfache Rampen sind, ausgebildet. Der Käfig 4 ist dabei an die resultierende Form der ersten Rampenscheibe 2 bzw. der zweiten Rampenscheibe 5 angepasst und kommt somit exakt zwischen der ersten Rampenscheibe 2 und der zweiten Rampenscheibe 5 zu liegen.

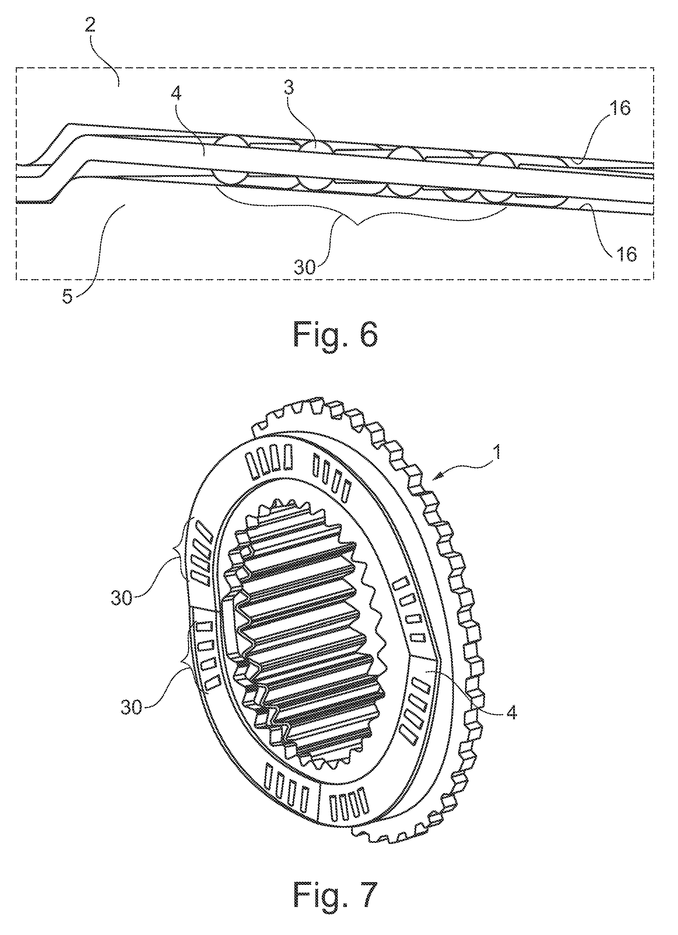

**Figur 6** zeigt eine vergrößerte Darstellung des in Figur 5 mit X gekennzeichneten Bereichs. Zwischen der ersten Rampenscheibe 2 und der zweiten Rampenscheibe 5 sind die zu Gruppen 30 zusammengefassten Nadeln 3 angeordnet. Die Nadeln 3 sind dabei im Käfig 4 drehbar gelagert und wirken entsprechend mit der einfachen Rampe 16 der ersten Rampenscheibe 2 bzw. der zweiten Rampenscheibe 5 zusammen, um damit eine Verstellung der Vorspanneinheit 1 zu erreichen.

**Figur 7** zeigt eine perspektivische Ansicht einer zweiten Ausführungsform der Erfindung. Dabei ist ebenfalls die erste Rampenscheibe 2 weggelassen, um einen besseren Einblick in die Anordnung der Nadeln 3 zu Gruppen 30 zu erhalten. Hinzu kommt, dass die Gruppen 30 der Nadeln 3 entsprechend der Anordnung der ersten Rampe 9 und der zweiten Rampe 10 in der ersten Rampenscheibe 2 bzw. der zweiten Rampenscheibe 5 am Käfig 4 angeordnet sind.

Da die erste Rampenscheibe 2 und die zweite Rampenscheibe 5 eine erste Rampe 9 und eine zweite Rampe ausgebildet haben und somit die Rampenkontur 8 für die Verstellung der Verstelleinheit darstellen, ist der Käfig 4 entsprechend geformt.

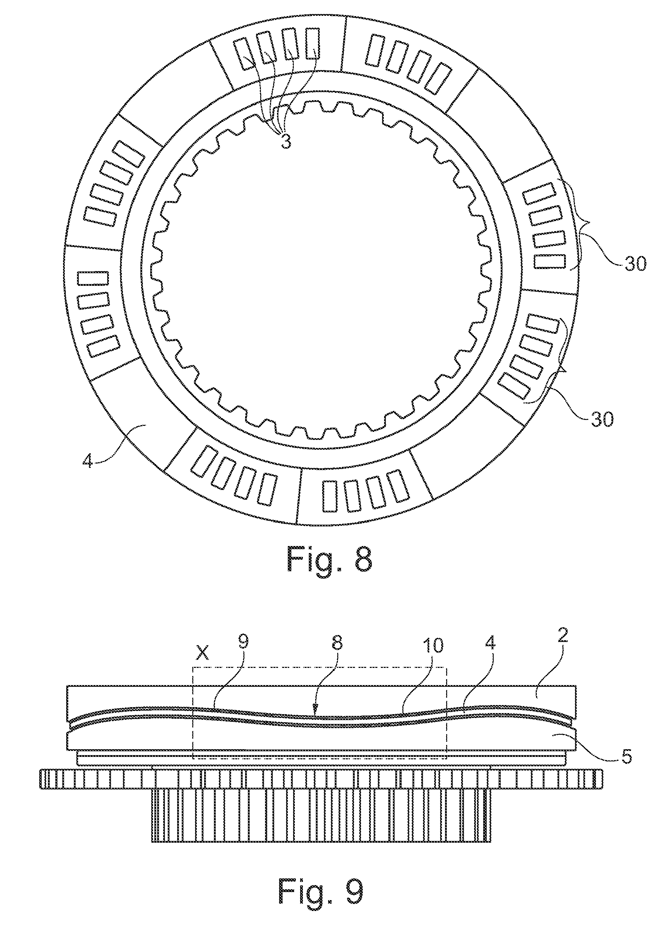

In der in **Figur 8** gezeigten Darstellung sind vier Nadeln 3 jeweils zu Gruppen 30 zusammengefasst. Da die erste Rampenscheibe 2 und die zweite Rampenscheibe 5 Rampenkonturen 8 ausgebildet haben, die aus einer ersten Rampe 9 und einer zweiten Rampe 10 bestehen, ist der Käfig 4 für die einzelnen Nadeln entsprechend ausgeformt, damit die zu Gruppen 30 zusammengefassten Nadeln entsprechend mit der ersten Rampe 9 oder der zweiten Rampe 10 der ersten Rampenscheibe 2 bzw. der zweiten Rampenscheibe 5 zusammenwirken können.

**Figur 9** zeigt eine Seitenansicht der zweiten Ausführungsform der Erfindung. Die erste Rampenscheibe 2 und die zweite Rampenscheibe 5 haben dabei Rampenkonturen 8 ausgebildet, die eine erste Rampenkontur 9 und eine zweite Rampenkontur 10 aufweisen. Zwischen der ersten Rampenscheibe 2 und der zweiten Rampenscheibe 5 ist der Käfig 4 angeordnet, der entsprechend der Ausformung der ersten Rampe 9 und der zweiten Rampe 10 geformt ist.

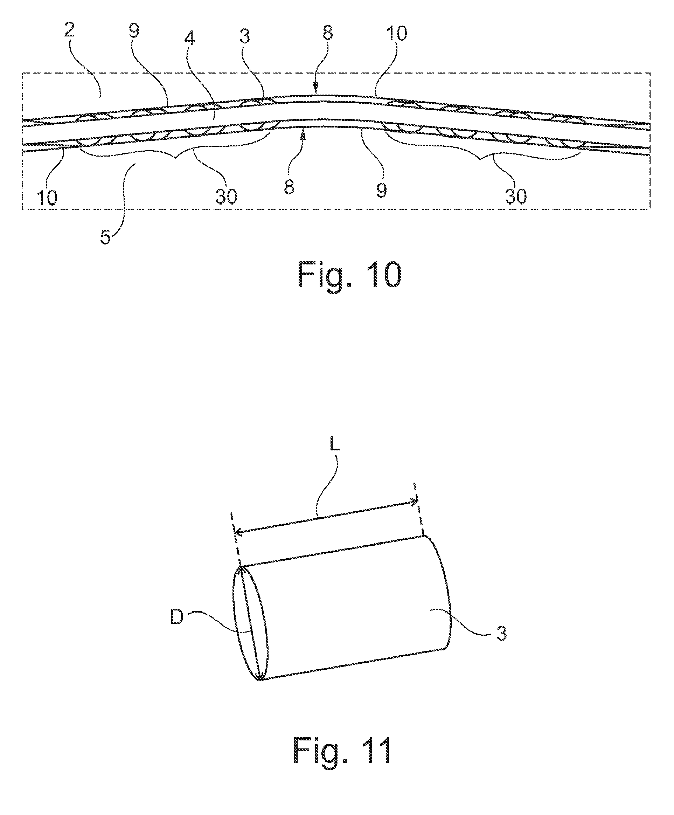

**Figur 10** zeigt die vergrößerte Darstellung des in Figur 9 mit X gekennzeichneten Bereichs. Die Rampenkontur 8 der ersten Rampenscheibe 2 und der zweiten Rampenscheibe 5 besitzt jeweils eine erste Rampe 9 und eine zweite Rampe 10. Entsprechend der Ausformung der ersten Rampe 9 und der zweiten Rampe 10 ist der Käfig 4 für die Halterung der Wälzlager 3 ausgebildet. Gemäß der Erfindung sind die Wälzlager 3 zu Gruppen 30 zusammengefasst. Die Gruppen 30 der Wälzlager sind dabei derart angeordnet, dass eine Gruppe mit der ersten Rampe 9 der ersten Rampenscheibe 2 und der zweiten Rampe 10 der zweiten Rampenscheibe 5 zusammenwirkt. Ebenso wirkt eine Gruppe mit der zweiten Rampe 10 der ersten Rampenscheibe 2 und der ersten Rampe 9 der zweiten Rampenscheibe 5 zusammen.

**Figur 11** zeigt eine perspektivische Darstellung eines Wälzkörpers 3, der in Form einer Nadel ausgebildet ist. Der Wälzkörper 3 besitzt eine Länge L und einen Durchmesser D. Der Wälzkörper ist dabei derart ausgebildet, dass die Länge L etwa dem dreifachen des Durchmessers D entspricht.

Wie bereits in der vorangegangenen Beschreibung erwähnt, sind vier Wälzkörper 3 bzw. vier Nadeln pro Rampe 9, 10, 16 bei den erfindungsgemäßen Vorspanneinheiten 1 zu Gruppen 30 zusammengefasst. Die einzelnen Nadeln sind in entsprechenden Taschen des Käfigs 4 positioniert und geführt. Eine weitere Laststeigerung könnte dadurch erzielt werden, dass mehrere Nadeln in einer gemeinsamen Tasche untergebracht werden. Die Käfigstege würden entfallen. Ein Nachteil ist die unsaubere Führung der Nadeln bzw. die fehlende Haltefunktion des Käfigs.

Bei der Verwendung von einer ersten Rampe und einer zweiten Rampe, sog. Doppelrampen, bei der erfindungsgemäßen Vorspanneinheit erfolgt die Belastungsübertragung richtungsabhängig nur über die Nadeln, die auf den belasteten Rampen anliegen. Die Nadeln sind zwar als zylinderförmige Nadeln in der vorangegangenen Beschreibung beschrieben worden, es ist für einen Fachmann jedoch selbstverständlich, dass die Wälzkörper 3 auch eine ballige Form besitzen können. Die Wälzkörper 3 besitzen bevorzugt einen Durchmesser zwischen 1 mm bis 5 mm.

Die Erfindung wurde unter Bezugnahme auf bevorzugte Ausführungsformen beschrieben. Es ist für einen Fachmann selbstverständlich, dass Änderungen und Abweichungen der Erfindung gemacht werden können, ohne dabei den Schutzbereich der nachstehenden Ansprüche zu verlassen.

## Patentansprüche

1. Vorspanneinheit (1) mit einer ersten Rampenscheibe (2) und einer zweiten Rampenscheibe (5), die beide mehrere Rampenkonturen (8) in einer Seite einer ringförmigen Fläche der Rampenscheiben (2, 5) ausgeformt haben, dass mehrere Wälzkörper (3) zwischen der ersten und der zweiten Rampenscheibe (2, 5) im einem Käfig (4) drehbar gehaltert sind, so dass in der Vorspanneinheit (1) durch Drehschwenken wenigstens einer der beiden Rampenscheiben (2, 5) relativ zu der anderen Rampenscheibe (5, 2) die Wälzkörper (3) an den Rampenkonturen (8) auf- und/oder absteigen, **dadurch gekennzeichnet, dass** mehrere Wälzkörper (3) in jeweils mehreren Gruppen (30) im Käfig (4) angeordnet sind und dass der Käfig (4) derart geformt ist, dass er an die Rampenkonturen (8) der beiden Rampenscheiben (2, 5) angepasst ist.

2. Vorspanneinheit (1) nach Anspruch 1, wobei jede Rampenkontur (8) eine einfache Rampe (16) ist und die mehreren Gruppen (30) der Wälzkörper mit der einfachen Rampe (16) der ersten und der zweiten Rampenscheibe (2, 5) zusammenwirken.

3. Vorspanneinheit (1) nach Anspruch 1, wobei jede Rampenkontur (8) eine erste Rampe (9) und eine zweite Rampe (10) umfasst und dass zwischen der ersten und der zweiten Rampenscheibe (2, 5) die Gruppen (30) der Wälzkörper (3) derart im Käfig (4) angeordnet sind, dass je eine Gruppe zwischen der ersten Rampe (9) der ersten Rampenscheibe (2) und der zweiten Rampe (10) der zweiten Rampenscheibe (5) und zwischen der zweiten Rampe (10) der ersten Rampenscheibe (2) und der ersten Rampe (9) der zweiten Rampenscheibe (5) angeordnet ist.

4. Vorspanneinheit (1) nach einem der Ansprüche 1 bis 3, wobei vier Wälzkörper (3) eine Gruppe (30) bilden.

5. Vorspanneinheit (1) nach einem der Ansprüche 1 bis 4, wobei die Wälzkörper (3) eine ballige Form besitzen.

6. Vorspanneinheit (1) nach einem der Ansprüche 1 bis 4, wobei die Wälzkörper (3) Nadeln sind.

7. Vorspanneinheit (1) nach Anspruch 6, wobei die Nadeln mindestens eine Länge besitzen, die dem Dreifachen des Durchmessers entspricht.

8. Vorspanneinheit (1) nach einem der Ansprüche 5 bis 7, wobei der Durchmesser der Wälzkörper (3) im Intervall zwischen 1 mm bis 5mm liegt.
